Europäisches Patentamt

European Patent Office

Office européen des brevets

(19)

(11) Publication number: **0 086 782**
**B1**

# (12) EUROPEAN PATENT SPECIFICATION

(45) Date of publication of patent specification: **07.08.85**

(21) Application number: **82901036.2**

(22) Date of filing: **23.03.82**

(86) International application number:
**PCT/SE82/00084**

(87) International publication number:
**WO 82/03213 30.09.82 Gazette 82/23**

(51) Int. Cl.⁴: **B 65 D 85/00** // **A01K97/06**

## (54) PACKAGE FOR FISH BAITS WITH TRIPLE HOOKS.

(30) Priority: **23.03.81 SE 8101819**

(43) Date of publication of application:
**31.08.83 Bulletin 83/35**

(45) Publication of the grant of the patent:
**07.08.85 Bulletin 85/32**

(84) Designated Contracting States:
**DE FR GB**

(56) References cited:
**CH-A- 277 551**
**US-A-1 255 516**
**US-A-2 703 467**

(73) Proprietor: **FISKREDSKAPSINDUSTRI
JOHANSSON & CO. AB
S-335 00 Gnosjö (SE)**

(72) Inventor: **JOHANSSON, Hans Anders Ingemar
Söderby
S-335 00 Gnosjö (SE)**

(74) Representative: **Ström, Tore et al
Ström & Gulliksson AB Studentgatan 1 P.O. Box
4188
S-203 13 Malmö (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a package for fish baits with triple hooks.

Known packages for fish baits are available on the market in several different designs, of which three main types will be described in greater detail in the following.

A common type of package for fish baits with triple hooks consists of a double-folded sheet of board or the like which is sealed along its edges. The double-folded sheet is at the bottom of its front portion provided with slots for insertion therein of two hook tips, and at the top portion provided with a slot for insertion therein of the eye located at the opposite end of the spinner.

The main disadvantage of this package is that the third hook projects freely from the package and involves a risk of accidental injury when handling the package. Even in those cases where the exposed hook tip has been provided with a guard attached thereto there is a risk that the package will hook into adjacent objects or that several packages will hook into each other. A further disadvantage is that several working sequences are required for mounting of the spinner on the package. Thus, two of the hook tips have to be introduced into the slots at the bottom of the package, after which the eye located at the opposite end of the spinner has to be secured in the·slot at the top of the package.

Another bait package of known type consists of a double-folded sheet of board having a rectangular aperture at the front. A transparent plastic pocket projects through this aperture, the plastic pocket being provided with side flanges which are fixed between the front and rear face of the double-folded sheet of board. The spinner is stored loose in the pocket provided therefor.

This package, although being advantageous as compared with the package previously described in that the fish spinner as a whole is enclosed in the pocket, does however have certain disadvantages from the manufacturing and use viewpoints. Thus, the package consists of two parts which have to be manufactured separately and then assembled. After insertion of the spinner into the pocket provided therefor the package has to be sealed eg by stapling along the edges of the package. A further disadvantage of the package is that it is convenient only in a once-for-all use, because it easily disintegrates when opening the package and removing the spinner.

A third known type of bait package consists of a transparent front sheet of plastic having bent over guide grooves for a rear section, eg a sheet of board, which can be inserted therein. The front sheet is provided with a protruding pocket, essentially conforming to the external profile of the spinner or triple hook. After insertion of the fish spinner into the pocket and the rear section into the guide grooves, the front sheet is fixed relative to the rear section by stapling.

This package too is disadvantageous in that it consists of two parts which have to be manufactured separately. The package also involves certain disadvantages from the handling viewpoint, in that assembly of the spinner in the package requires several working sequences. During the insertion of the spinner the front sheet of the package is held with the pocket facing downwards, after which the spinner is inserted therein. The rear section is subsequently pushed into the guide grooves in the front sheet, the front sheet and the rear section then being fixed relative to each other by stapling. When removing the spinner from the package it is important that the package be held with the pocket facing downwards during withdrawal of the rear section. Otherwise the spinner can easily drop out of the package and fasten onto some object and cause damage. This package too is best suited in a once-for-all use, because the two sections of the package have to be fixed relative to each other by means of staples or the like.

The object of the present invention is to provide a package for fish baits with triple hooks in which the above-mentioned disadvantages and shortcomings of known packages are eliminated and which is quite suitable for exposing the fish bait and provides a safe containment for the fish bait hooks so as to prevent accidental injury during handling of the package, which facilitates easy insertion and removal of the fish bait and repeated opening and closure of the package, making possible a continued use of the packaged as a hook guard, and which is designed to permit manufacture of the package in a single working operation and from a single piece of material.

In accordance with the present invention the objects mentioned above are achieved by designing a package for fish baits with triple hooks in accordance with the features specified in the appended claims.

The invention will be described in the following by reference to an embodiment illustrated in the accompanying drawings in which

Fig 1 is a side view of a package in accordance with the invention,

Fig 2 is a fragmentary cross-sectional view along the line II—II in Fig 1.

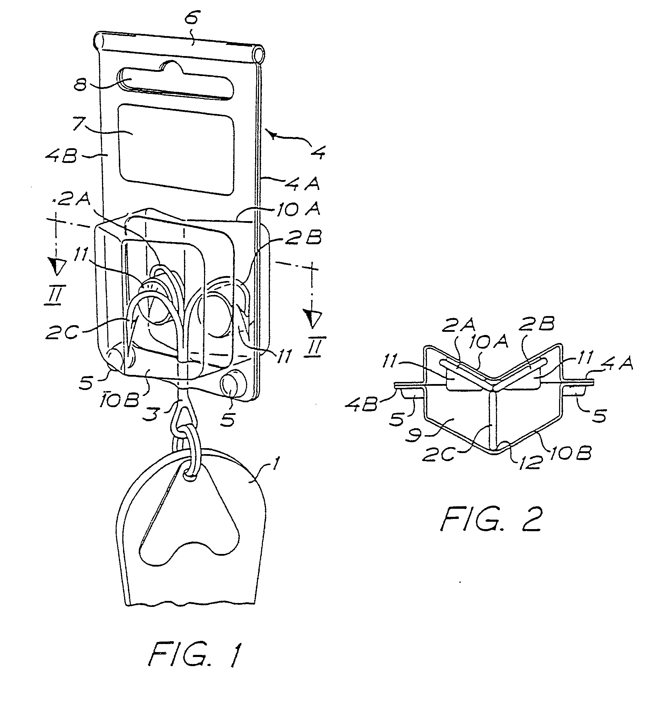

Fig 1 shows a fragmented view of a fish bait 1 having a triple hook which consists of a hook crown with three hooks 2A, 2B and 2C and a shank 3. The package comprises a double-foldable piece of material 4, eg of transparent plastic, with means 5 in the form of squeezed-out connectors which can be snapped into each other for the releasable fastening of the piece of material, when folded double during bending at 6. In this double-folded condition two portions 4A and 4B of the piece of material 4 are adjacent to each other and a label 7 can be placed between flat sections of the portions 4A and 4B. A through slot 8 is provided in the double-folded piece of material to facilitate the package being hung up.

The double-folded piece of material forms a cavity 9 (Fig 2) for accommodating the hooks 2A, 2B, 2C with the hook shank 3 projecting from the cavity between the adjacent portions 4A and 4B of the piece of material 4, as shown in Fig. 1. Two opposite side walls 10A and 10B of the cavity 9, which are each formed by the portions 4A and 4B of the piece of material 4, are V-shaped in cross-section with side wall 10A sloping inwardly of the cavity 9 and on the inside being provided with squeezed-up cylindrical projections 11 for supporting the triple hook at two of the hooks, namely hooks 2A and 2B which are supported by the projections 11. The second side wall 10B slopes outwards so as to guide the triple hook at the third hook 2C in the groove 12 which is formed in this side wall inside the cavity.

The fact that the package consists of a double-foldable piece of material permits efficient manufacture of the package, making possible to use as a basis a web of material, eg a web of transparent plastic material, from which the package is formed, using some known method, eg thermal shaping or vacuum-forming.

The insertion of the hook crown of the fish bait 1 in the prepared package is a simple operation. Thus, the hook crown is placed in the package half 4A with the hooks 2A and 2B in contact with the upper face of projections 11 and with the hook shank 3 projecting from the package half. The label 7 is inserted on the flat section of package half 4A, after which package half 48, by folding it around the bending line 6 formed in the package, is made to contact package half 4A and is locked to the latter by means of the snap connection 5. The package is then ready for its intended use.

In accordance with an alternative embodiment of the invention the cavity 9 is provided with adequate dimensions to provide space for a label which can be inserted in the cavity, whereby the outward-sloping V-shaped side wall 10B forms a support for the label. After insertion of the triple hook in the package, the label is kept in contact with the outward-sloping V-shaped side wall 10B by the outward-facing third hook 2C. In this embodiment the package can be made shorter, which requires reduced consumption of material during production of the package and provides a more compact package.

When the fish bait is to be used the package halves 4A and 4B which are held together in releasable fashion by means of the snap connector are separated from each other after which the hook crown can easily be removed from the package. After using the fish baits the hook crown can be inserted again into the package and the package sections 4A and 4B can be locked to each other again by means of the snap connector 5. Thus, during the continued use of the fish bait the package can be employed as a hook guard.

**Claims**

1. Package for fish baits (1) with triple hooks, consisting of a hook crown with three hooks (2A, 2B, 2C) and a shank (3), said package comprising a rear section (4A) and a forward section (4B) arranged so that in contact with each other they form a cavity (9) to accommodate the hook crown (2A, 2B, 2C), characterized in that said forward section (4B) and rear section (4A) are formed from one piece of material (4) which in a double-folded state forms the said cavity (9) for accommodating the hook crown with the shank (3) projecting from the cavity (9) between the sections (4A, 4B) of the piece of material (4) which are in contact with each other, and that of two opposite side walls (10A, 10B) of the cavity (9), each forming a different one of said sections (4A, 4B) of the piece of material (4), one side wall (10A) is provided on the inside with projections (11) for supporting the triple hook at two of the hooks (2A, 2B) and the second side wall is provided with trough-like guide groove for guiding the triple hook at its third hook (2C), and that the piece of material includes means (5) for the releasable fastening together of the sections of material in the double-folded condition.

2. Package as claimed in claim 1, characterized in that said trough-shaped guide groove is formed by said second side wall (10B) proceeding outwards of the cavity (9) in V-fashion for guiding the triple hook at its third hook (2C) in the groove (12) formed within said cavity by said side wall.

3. Package as claimed in claims 1 or 2, characterized in that the side wall (10A) which is provided with projections (11) proceeds inwards of the cavity (9) in V-fashion.

4. Package as claimed in any of claims 1 to 3, characterized in that the sections (4A, 4B) of the piece of material (4) which are in contact with each other extend from the cavity (9) for accommodating the hook crown and that between them is formed a location for a label (7) which can be inserted therein.

5. Package as claimed in claim 2, characterized in that the side wall (10B) which proceeds outwards in V-fashion is designed as a supporting surface for a label which can be inserted in the cavity (9) and which by means of said third hook (2C) is kept in contact with the V-shaped wall.

**Patentansprüche**

1. Verpackung für Fischköder (1) mit Dreifach-Haken, die aus einer Hakenkrone mit drei Haken (2A, 2B, 2C) und einem Schaft (3) bestehen, wobei diese Verpackung einen Rückseiten-Abschnitt (4A) und einen Vorderseiten-Abschnitt (4B) umfaßt, die so angeordnet sind, daß sie in Kontakt miteinander einen Hohlraum (9) zur Aufnahme der Hakenkrone (2A, 2B, 2C) bilden, dadurch gekennzeichnet, daß der Vorderseiten-Abschnitt (4B) un der Rückseiten-Abschnitt (4A) aus einem Materialstück (4) gebildet sind, welches in einem doppelt gefalteten Zustand den Hohlraum (9) zur Aufnahme der Hakenkrone mit dem Schaft (3) bildet, der aus dem Hohlraum (9) zwischen den Abschnitten (4A, 4B) des Materialstückes (4) hervorragt, welche in Kontakt miteinander sind, und dass von den zwei entgegensetzten Seitenwänden (10A, 10B) des Hohlraumes (9), von denen jeder einen verschiedenen Abschnitt (4A, 4B) des Materialstückes (4) bildet, eine Seitenwand (10A) auf der Innenseite mit Vorsprüngen (11) zum Halten des Dreifach-Hakens an zwei der Haken (2A, 2B) ausgestattet ist und die zweite Seitenwand mit einem durchgangsähnlichen Führungseinschnitt zum Führen des Dreifach-Hakens an seinem dritten Haken (2C) ausgestattet ist, und daß das Materialstück eine Einrichtung (5) zum lösbaren Zusammenhalten der Material-Abschnitte in der doppelt gefalteten Beschaffenheit umfaßt.

2. Verpackung nach Anspruch 1, dadurch gekennzeichnet, daß der in einem Durchgang geformte Führungseinschnitt durch die zweite Seitenwand (10B) gebildet ist, die von dem Hohlraum (9) nach aussen in V-form verläuft, um den Dreifach-Haken an seinem dritten Haken (2C) in dem Einschnitt (12) zu führen, der innerhalb des Hohlraumes durch die Seitenwand gebildet wird.

3. Verpackung nach Anspruch 1 oder 2, dadurch gekennzeichnet, daß die Seitenwand (10A), die mit Vorsprüngen (11) ausgestattet ist, von dem Hohlraum (9) in V-Form nach innen verläuft.

4. Verpackung nach einen der Ansprüche 1-3 dadurch gekennzeichnet, daß sich die Abschnitte (4A, 4B) des Materialstücks (4), die in Kontakt miteinander sind, von dem Hohlraum (9) zur Aufnahme der Hakenkrone erstrecken und das zwischen ihnen ein Raum für ein Bezeichnungsschild (7) gebildet ist, welches darin eingesetzt werden kann.

5. Verpackung nach Anspruch 2, dadurch gekennzeichnet, daß die Seitenwand (10B), die sich in V-Form nach aussen erstreckt, als Halteoberfläche für ein Bezeichnungsschild gestaltet ist, daß in den Hohlraum (9) eingesetzt werden kann und welches mittels des dritten Hakens (2C) in Kontakt mit der V-förmigen Wand gehalten wird.

**Revendications**

1. Emballage pour appâts (1) à hameçon triples, comprenant une couronne d'hameçon à trois crochets (2A, 2B et 2C) et une hampe (3), ledit emballage comprenant une partie arrière (4A) et une partie avant (4B) disposées de façon à former, lorsqu'elles sont en contact l'une avec l'autré, une cavité (9) destinée à recevoir la couronne (2A, 2B et 2C) de l'hameçon, caractérisé en ce que ladite partie avant (4B) et ladite partie arrière (4A) sont formées d'une seule pièce de matière (4) qui, dans un état doublement plié, forme ladite cavité (9) destinée à loger la couronne de l'hameçon de manière que la hampe (3) dépasse de la cavité (9) entre les parties (4A, 4B) de la pièce de matière (4) qui sont en contact l'une avec l'autre, et en ce qu'une première paroi latérale (10A), faisant partie de deux parois latérales opposées (10A, 10B) de la cavité (9), formant chacune l'une, différente, desdites parties (4A, 4B) de la pièce de matière (4), comporte, sur le côté intérieur, des saillies (11) destinées à supporter l'hameçon triple par deux des crochets (2A, 2B) et la seconde paroi latérale présente une gorge de guidage analogue à une gouttière destinée à guider l'hameçon triple par son troisième crochet (2C), et en ce que la pièce de matière comprend des moyens (5) destinés à fixer de façon amovible les parties de matière l'une à l'autre à l'état doublement plié.

2. Emballage selon la revendication 1, caractérisé en ce que ladite gorge de guidage en forme de gouttière est formée par le fait que ladite seconde paroi latérale (10B) s'étend vers l'extérieur de la cavité (9) à la maïnère d'un V afin de guider l'hameçon triple par son troisième crochet (2C) dans la gorge (12) formée à l'intérieur de ladite cavité par ladite paroi latérale.

3. Emballage selon les revendications 1 ou 2, caractérisé en ce que la paroi latérale (10A) qui comporte des saillies (11) s'étend vers l'intérieur de la cavité (9) à la manière d'un V.

4. Emballage selon l'une quelconque des revendications 1 à 3, caractérisé en ce que les parties (4A, 4B) de la pièce de matière (4), qui sont en contact l'une avec l'autre, s'étendent à partir de la cavité (9) pour recevoir la couronne de l'hameçon et en ce qu'il est formé entre elles un emplacement pour une étiquette (7) pouvant y être insérée.

5. Emballage selon la revendication 2, caractérisé en ce que la paroi latérale (10B) qui s'étend vers l'extérieur à la manière d'un V est conçue de façon à former une surface de support pour une étiquette qui peut être insérée dans la cavité (9) et qui est maintenue par ledit troisième crochet (2C) en contact avec la paroi de forme en V.

FIG. 1

FIG. 2

1